Europäisches Patentamt

European Patent Office

Office européen des brevets

(19)

(11) Publication number: **0 192 303**
**B1**

# EUROPEAN PATENT SPECIFICATION

(45) Date of publication of the patent specification:
18.01.89

(51) Int. Cl.⁴: **D01F 6/04, C08J 7/02**

(21) Application number: **86200221.9**

(22) Date of filing: **15.02.86**

(54) **Process for prepapring polyolefin gel articles, as well as for preparing herefrom articles having a high tensile strength and modulus.**

(30) Priority: **20.02.85 NL 8500477**

(43) Date of publication of application:
**27.08.86 Bulletin 86/35**

(45) Publication of the grant of the patent:
**18.01.89 Bulletin 89/3**

(84) Designated Contracting States:
**AT BE CH DE FR GB IT LI NL SE**

(56) References cited:
**EP-A- 0 048 227**
**EP-A- 0 055 001**
**EP-A- 0 064 167**
**EP-A- 0 077 590**
**GB-A- 2 051 667**
**US-A- 3 515 567**

(73) Proprietor: **STAMICARBON B.V., Mijnweg 1, NL-6167 AC Geleen(NL)**

(72) Inventor: **Bastiaansen, Cornelis Wilhelmus Maria, Ophoven 137, NL-6133 XT Sittard(NL)**
Inventor: **Meijer, Henricus Eduard Hubertus, P. Meullenersplein 4, NL-6125 CJ Obbicht(NL)**
Inventor: **Lemstra, Pieter Jan, Walcundusstraat 3, NL-6444 TX Brunssum(NL)**

ACTORUM AG

## Description

The invention relates to a process for preparing highly stretchable gel particles on the basis of high-molecular polyolefins, as well as to a process for preparing articles having a high tensile strength and modulus, starting from such polyolefin gel articles.

It is known in the art to prepare articles, particularly filaments and ribbons, having a high tensile strength and modulus, starting from solutions of high-molecular polymers, particularly high-molecular linear polyethylene, see for instance US-A 4 344 908, US-A 4 422 993, US-A 4 430 383, US-A 4 411 854 and US-A 4 436 689. In this known process a solution of at most 20% (wt) of a high-molecular polymer (particularly polyethylene) is converted at elevated temperature via a round or slit-shaped spinning aperture into a filament or ribbon, which is subsequently transformed by cooling into a gel filament or gel ribbon, upon which the gel filament or gel ribbon is stretched at elevated temperature, whether or not after removal of all or part of the solvent.

In this known process relatively dilute solutions are started from, because it has been found that the stretchability and, with it, the final modulus and tensile strength are higher as the concentration of the polymer solution is lower.

A disadvantage of such process is, therefore, that it is necessary in these processes to prepare a dilute homogeneous polymer solution, which is known to involve a rather high amount of costs.

Another disadvantage is that the conversion of such dilute solutions to form solvent-containing articles, for instance by spinning, extrusion, and so on, is a rather expensive process step, the costs of which are in proportion, of course, to the amount of the solution to be processed and, consequently, per quantity of product to be prepared, strongly depend on the concentration of the solution.

A further disadvantage of this process is that the rate of production strongly depends on (is determined by) the rate of spinning/extrusion, which of course correlate with the concentration of the solution.

The present invention now provides a process for preparing highly stretchable gel articles, as well as products having a high tensile strength and a high modulus, on the basis of high-molecular polyolefins, in which process said disadvantages do not occur, or hardly so.

The invention therefore relates to a process for preparing highly stretchable gel articles on the basis of high-molecular polyolefins, which process is characterized in that a shaped, solvent-containing or solvent-free article of a polyolefin with a weight-average molecular weight of at least $4 \times 10^5$ is contacted with a swelling agent at a temperature above the dissolving temperature of the polyolefin and below the temperature at which the polyolefin and/or the swelling agent will decompose and the swollen article is subsequently cooled to below the gelling temperature.

The shaped polyolefin article can be contacted with the swelling agent in various ways, for instance by introducing the article into a gaseous swelling agent or contacting it with the vapour over a swelling agent. The article is preferably introduced into a bath of swelling agent. The time during which the article is contacted with the swelling agent may vary, depending on the amount of solvent in the article, the composition, shape and temperature hereof, the nature and temperature of the swelling agent, as well as the desired amount of swelling agent to be taken up. Generally the article is contacted with the swelling agent for such a length of time that the swollen article contains 60 to 99, particularly 75-95% (wt) swelling agent.

As it has been found that the degree of stretchability of the gel article obtained after cooling increases as the amount of swelling agent taken up increases, swollen articles with a high percentage of swelling agent, for instance 85-95% (wt), will generally be aimed at for the preparation of articles with a very high tensile strength and modulus (to be obtained from gel articles with a very high stretchability). When using articles from polyolefins with an ultra-high molecular weight, for instance more than $3 \times 10^6$, particularly more than $6 \times 10^6$, a swollen article containing 95–99% (wt) swelling agent is preferably aimed at, because below that the stretchability is rather low.

As stated above, the time required to reach any desired swelling depends on a large number of factors. Surprisingly it has been found that generally a very substantial take-up of swelling agent is reached in a very short time. Thus the time required for the swelling of hot solvent-containing articles is usually only a few seconds or of hot thin articles even only a fraction of a second. Generally it may be stated that, depending on the thickness or diameter of the article in millimetres (D), this required time (t) is between $(0,1 \ D^2$ and $100 \ D^2)$ minutes. Generally with fibres, tapes and films a swelling time of 0.01 to 10 minutes, specifically 0.1–5 minutes, will suffice.

According to the invention the shaped polyolefin article is contacted with the swelling agent at a temperature above the dissolving temperature of the polyolefin. This temperature must, of course, not be so high as to result in substantial thermal decomposition of the polyolefin and/or swelling agent. Further, this temperature must usually be below the boiling point of the swelling agent. So the temperature to be applied depends in part on the polyolefin and swelling agent used. Generally the chosen temperature will be between about 75 and 220°C, more specifically between 100 and 180°C.

The polyolefin articles to be used in the present process may be filament, fibre, ribbon, tape, film, tube, profile or barshaped or be shaped otherwise, or consist of hollow or solid shaped articles and may contain solvent or not. Such articles may be obtained in various ways.

Thus a finely divided solid polyolefin may, for instance, be transformed in a kneader, particularly an extruder, into a shaped article, such as a fibre, tape, film or bar, etc.

It is possible also to transform a solid polyolefin via a pressure forming or a sintering process into a shaped article. Another possibility is to transform a melted polyolefin not having an ultra-high molecular weight into a shaped article via, for instance, extrusion.

It is possible also to use a solvent-liberated gel prepared via a thermoreversible gelling process. Such a gel can be obtained by converting a solution of a high-molecular polyolefin at elevated temperature into a solvent-containing article, converting this article by rapid cooling into a gel article and substantially liberating the resulting gel article from solvent. An extra advantage in this mode of realizing the invention is that it provides the possibility of a high flexibility in respect of the solvents applied. For instance, the solvent most suitable for the shaping process can be applied and subsequently be replaced by a swelling agent more suitable or more attractive for the preparation of a highly stretchable gel and/or stretched product.

The shaped polyolefin article applied is preferably a solvent-containing article obtained by converting, at elevated temperature, in a screw extruder provided with conveying and kneading sections, a suspension of a high-molecular polyolefin in a solvent to form a homogeneous solution and shaping it into, for instance, a filament, ribbon, film, tube or bar.

It is an advantage for the extruder applied for this purpose to be a co-rotating twin-screw extruder, which usually mixes and kneads the suspension at a speed of about 30–300 rpm, at which the suspension is transformed in about 0.5–45 minutes at mechanical shear rates of about 5 to 2000 sec$^{-1}$.

The resulting solution is then usually converted into a shaped article via a profiled head, it being an advantage for a gear pump to be incorporated between extruder and head.

Generally, in this process possibly pre-stretched, shaped articles containing 40–90% (wt) solvent will be prepared. If as stated above articles based on ultra-high-molecular polyolefins are used (more than 3 x 10$^6$, resp. 6 x 10$^6$), articles containing 60–90% (wt), resp. 80–95% (wt) solvent will usually be applied.

As solvent various solvents known per se can be used in this process, such as aliphatic, cycloaliphatic and aromatic hydrocarbons with boiling points of at least 100°C, such as paraffins, paraffin waxes, toluene, xylenes, tetralin, decalin, C$_9$–C$_{12}$-alkanes or petroleum fractions, but also halogenated hydrocarbons, for instance trichlorobenzene, and other known solvents. Because of the low cost preference will mostly be given to non-substituted hydrocarbons, including hydrogenated derivatives of aromatic hydrocarbons.

Though not strictly necessary, the chosen swelling agent in this preferred realization of the process according to the invention will usually be the same as the solvent applied.

It may be an advantage to pre-stretch the extruded (shaped) polyolefin (solution) hot or cold, so that dimension D, which determines the swelling time, is lowered. Surprisingly it has been found that the negative aspects inherent in pre-stretching are absent when viewing the overall stretching process, because in the swelling process the preceding history is eliminated. A very great advantage, particularly in the manufacture of fibres, is that in this process limitations in the rate of production and titre diameter are eliminated.

The swelling agent applied may in principle be a gas, such as a lower alkane (butane, pentane, heptane). Preference is given to using substances that are liquid at the prevailing temperature. Generally the chosen swelling agent is a liquid having a Flory-Huggins interaction parameter, the so-called Chi value, between polyolefin and liquid lower than about 0.5 [a definition of this parameter is given, for instance, in 'Principles of Polymer Chemistry' by P.J. Flory (Cornell University Press, Ithaca 1953)]. Moreover, the liquid must have a relatively high diffusion coefficient.

Examples of suitable swelling agents include decalin, xylene, tetralin, trichlorobenzene.

Although paraffins can in principle be used as swelling agents, they will generally not be chosen, because it has been found that if they are used the required swelling time is relatively long (low diffusion coefficient).

The polyolefin that can be applied is preferably a linear polyethylene with a weight-average molecular weight of at least 4 x 10$^5$, specifically at least 8 x 10$^5$. In this connection high-molecular linear polyethylene is understood to mean polyethylene that may contain minor amounts, preferably 5 moles% at most, of one or more other alkenes copolymerized with it, such as propylene, butylene, pentene, hexene, 4-methylpentene, octene, etc., with at least 100 unbranched carbon atoms and preferably with at least 300 unbranched carbon atoms between carbon atoms provided with side chains with more than 1 C-atom. The polyethylene may contain minor amounts, preferably 25% (wt) at most, of one or more other polymers, particularly an alkene-1-polymer, such as polypropylene, polybutylene or a copolymer of propylene with a minor amount of ethylene.

Here the polyethylene may optionally contain substantial amounts of fillers as described in US-A 4 411 854. It may also be an advantage to use a polyethylene of which the weight-average and number-average molecular weight ratio is lower than 5, as described in US-A 4 436 689.

As the viscosity of the solution increases as the molecular weight of the polyethylene increases, in consequence of which the solution will be more difficult to process, polyethylene with molecular weights higher than 25 x 10$^6$ will generally not be used, even though the present process is indeed feasible with higher molecular weights. The weight-average molecular weights can be determined according to known methods by gel permeation chromatography and light scattering.

The polyolefin applied may also be polypropylene with a high molecular weight, particularly more than 5 x 10$^5$.

According to the invention the swollen article obtained is cooled below the gelling temperature. This temperature depends on the concentration and nature of the polyolefin and on the swelling agent applied and is generally 75 to 95°C.

Specifically, the swollen article is gelled by cooling it to about the ambient temperature. This cooling can be effected, for instance, by contacting the article with a very cold cooling surface, or by cooling in or in contact with a cold gaseous medium, such as air, nitrogen, etc.

Preference is given to effecting the cooling by quenching the article in a liquid medium. To this end a liquid may be used in which the polyolefin as well as the swelling agent applied hardly dissolve, such as water.

It is also possible to use a liquid medium in which the polymer is hardly and the swelling agent reasonably well or well soluble. In this last-mentioned mode of realization a swelling agent extraction process takes place simultaneously with and in addition to the cooling. Examples of such liquid media include trichloroethylene, dichloromethane, methanol or trichlorotrifluoroethane.

The gel article obtained after cooling can subsequently be transformed by stretching to an article having a high tensile strength and modulus. Any swelling agent that may yet be present can be removed in that process in whole or in part before the stretching, for instance by evaporation, extraction, etc.

It is also possible, however, to stretch a gel article containing substantial amounts of swelling agent.

Hollow and solid shaped articles may be given shape – after removal of the swelling agent – by stretching and simultaneous calibration.

Preference is given to stretching the gel articles at elevated temperature, particularly above 75°C. The stretching will then preferably be effected below the melting point or solution point of the polyalkene, because above that temperature the mobility of the macro-molecules will soon be so high that the desired orientation cannot be achieved, or only to an insufficient degree. The intramolecular generation of heat resulting from the stretching of the articles must be taken into account. At high rates of stretching the temperature in the articles may thus show a strong rise and care must be taken that it does not get near or even beyond the melting point.

The articles can be brought to the stretching temperature by introducing them into a zone with a gaseous or liquid medium, which is kept at the desired temperature. A tubular oven with air as gaseous medium is very suitable, but a liquid bath or any other appropriate device can also be used.

In the stretching process any swelling agent (that may yet be) present will be separated from the article. This is promoted preferably by appropriate measures, such as the removal of the vapour of the swelling agent by passing a hot gas or air stream along the article in the stretching zone, or by stretching in liquid bath comprising an extractant for the swelling agent, which extractant may optionally be the same as the swelling agent. The final article must be free of swelling agent and it is an advantage for the conditions to be so chosen that this situation is reached, at least virtually so, already in the stretching zone.

The moduli (E) and tensile strenths (σ) are calculated by means of stress-strain curves as determined at room temperature with an Instron Tensile Tester, at a testing speed of 10% per minute and reduced to the original diameter of the sample. The stretching of the articles may be uniaxial, biaxial, as well as multiaxial. In uniaxial stretching high draw ratios (for instance above 10) can be applied. With for instance fibres and tapes ultra-high draw ratios (higher than 20) are customary. It may be an advantage for the gel product to be subjected to irradiation, particularly electron irradiation, before or during the stretching, in which irradiation process products with reduced creep and fibrillation are obtained.

The products according to the invention are suitable for many uses.

Filaments and tapes, for instance, can be used as reinforcement in many materials which are known to be reinforced with fibres or filaments, and for all uses in which a low weight combined with a high strength is desirable, such as, for instance, rope, nets, filter cloths, fabrics, magnetic tapes.

The films according to the invention are suitable for many applications. They can be cut to form strong bands, ribbons, tapes. They can be used as reinforcement in many materials that are known to be reinforced with films or ribbons and for all applications in which a low weight combined with great strength is desirable, such as, for instance, audiovisual or magnetic tapes, tapes for medical uses, packaging films, protective sheeting, substrates for adhesives, insulating films in condensers, etc.

If so desired, minor amounts of the usual additives, stabilizers, fibre-treating agents and the like can be incorporated in or on the articles, specifically amounts of 0.1–10% (wt) in respect of the polyalkene.

The invention is further elucidated in the following examples without, however, being limited thereto.

Example A (comparative example)

A high-molecular polyethylene of the Hizex®-240 M grade (Mitsui Petrochemicals) having a weight-average molecular weight $M_w$ of about $1.9 \times 10^6$ ($\eta_{decalin}$, 135°C = 15.5: Fliesswert N/mm² = 0.30) was suspended in decalin to a nominal concentration of 30% (wt) at room temperature. After deaeration and washing with nitrogen and addition of a stabilizer composition the suspension was fed to an extruder while being stirred continuously (in order to prevent settlement). A twin-screw co-rotating extruder of the ZSK type of Werner and Pfleiderer was opted for; L/D = 27. It was provided with 2 x 30-mm screws composed of alternating conveying and kneading elements. The suspension was supplied at room temperature to the feeding zone, the thermostat temperature of which was set at about 80°C. The suspension of polyethylene in decalin was extruded at about 180°C (head temperature) at a speed of 200 rpm. With a gear pump a residence time of about 6 minutes was created in the extruder.

Under the above conditions the process produced a clear solution free of suspended particles, having a constant composition and concentration.

Via an aperture (diameter 1 mm) the mixture was carried off from the extruder at a temperature of about 160°C, upon which the solvent-containing filaments were quenched in a water bath and subsequently passed through a bath containing trichloroethylene for the extraction of decalin. The filaments were subsequently stretched via a two-step process, first in an oven at a temperature between 90–120°C and subsequently on a hot plate with a temperature gradient between 135 and 150°C.

The total draw ratio was 19 and the filament titre 410 dtex/filament, the E modulus 18 GPa and the strenth ($\sigma$) 0.55 GPa.

## Comparative example B

The process of example A was repeated on the understanding that the solvent-containing fibre was first pre-stretched about 10 x and subsequently quenched. The following draw ratio was 16, the filament titre 32 dtex/filament, the E modulus about 20 GPa and the strength ($\sigma$) about 0.6 GPa.

It is clear from these two examples that it is impossible via the known processes (thermoreversible gelling), starting from solutions of a very high concentration, to prepare fibres with a really high strength and modulus, not even through the process of pre-stretching.

## Example I

The process of example I was repeated, but this time the solvent-containing filaments from the extruder were first passed through a decalin bath with a temperature of 160°C before quenching. The residence time in the bath was about 1.1 minutes. The swollen filaments were converted via quenching, extraction and two-step stretching (total draw ratio 55) into product filaments having the following properties:
filament titre = 150 dtex/filament
E-modulus = 75 GPa
strength ($\sigma$) = 2.2 GPa.

## Example II

The process of example I was repeated, but now the applied residence time in the swelling bath was about 2.5 minutes. With a total draw ratio of 95, product filaments were obtained having the following properties:
filament titre = 90 dtex/filament
E-modulus = 110 GPa
strength ($\sigma$) = 2.9 GPa.

## Example III

The process of example B was repeated on the understanding that the pre-stretched dry filaments obtained after extraction were subjected for 30 seconds to a swelling process in decalin (150°C) in the manner described in Example I.
With a following draw ratio of 75, product filaments were subsequently obtained having the following properties:
filament titre: 18 dtex/filament

E-modulus = 85 GPa
strength ($\sigma$) = 2.4 GPa.

## Example IV

The process of example III was repeated, but now with a residence time of 45 seconds in the decalin bath. Subsequent stretching with a draw ratio of about 90 resulted in product filaments having the following properties:
filament titre = 13 dtex/filament
E-modulus = 110 GPa
strength ($\sigma$) = 3.3 GPa.

## Comparative example C

The process of example A was repeated on the understanding that via the extruder a 10% (wt) solution was prepared. With a total draw ratio of 39, products were obtained in this process having the following properties:
filament titre = 62 dtex/filament
E-modulus = 80 GPa
strength ($\sigma$) = 1.8 GPa.

## Example V

The process of example C was repeated on the understanding that – as described in example I – the filaments from the extruder were first subjected for 21 seconds to a swelling process in decalin. With a total draw ratio of 94, products were obtained in this process having the following properties:
filament titre = 19 dtex/filament
E-modulus = 120 GPa
strength ($\sigma$) = 3.0 GPa.

## Example VI

The process of example V was repeated on the understanding that the filament obtained from the extruder was pre-stretched about 10 x and a swelling time of 2.5 seconds was applied. Subsequent stretching with a draw ratio of about 70 produced filament products having the following properties:
filament titre = 3 dtex/filament
E-modulus = 120 GPa
strength ($\sigma$) = 3.3 GPa.

## Example VII

A high-molecular polyethylene of the Hostalen® GUR-412 grade (Ruhrchemie/Hoechst) with a weight-average molecular weight of about $1.5 \times 10^6$ ($\eta_{decalin}$, 135°C = 15; Fliesswert = 0.24 N/mm²) was pressure-formed for 0.5 hour at 200°C and 800 bar to form a sheet of a thickness of 0.5 mm.

The resulting sheet was subjected to swelling in a xylene bath (temperature 120°C) for 15 minutes, subsequently cooled in air and successively dried.

The resulting gel sheet was cut to form tapes, which were stretched with a draw ratio of 45 at 110°C, yielding product tapes having an E-modulus of 110 GPa.

## Example VIII

In the manner described in example VII a Hizex®-240 M grade polyethylene was pressure-formed to form a sheet, which was subjected to a swelling process in a decalin bath (160°C) for 10 minutes and subsequently cooled, dried and cut to form tapes.

The resulting gel tapes were stretched with a total draw ratio of 50 in two steps at a temperature gradient of 120–140°C, yielding product tapes having an E-modulus of 130 GPa.

## Claims

1. Process for preparing highly stretchable gel articles on the basis of high-molecular polyolefins, which process is characterized in a shaped solvent-containing or solvent-free article of a polyolefin with a weight-average molecular weight of at least 4 x $10^5$ is contacted with a swelling agent at a temperature above the dissolving temperature of the polyolefin and below the temperature at which the polymer and/or the swelling agent will decompose for such a length of time (t) that t, expressed in minutes, is higher than 0,1 $D^2$ and lower than 100 $D^2$, where D represents the thickness, respectively the diameter, of the article in millimetres, until the swollen article contains 60 to 99% (wt) swelling agent, and the swollen article is subsequently cooled to below the gelling temperature.

2. Process according to claim 1, characterized in that the shaped polyolefin article is contacted with the swelling agent for such a length of time that the swollen article contains 75 to 95% (wt) swelling agent.

3. Process according to claim 1 or 2, characterized in that the shaped polyolefin article is contacted with the swelling agent for 0.01 to 10 minutes.

4. Process according to any one of claims 1–3, characterized in that the shaped polyolefin article is contacted with the swelling agent at a temperature of about 75 to about 220°C.

5. Process according to any one of claims 1–4, characterized in that the swelling agent applied is a gaseous lower alkane.

6. Process according to any one of claims 1–4, characterized in that the swelling agent applied is decalin, xylene, tetralin or trichlorobenzene.

7. Process according to any one of claims 1–6, characterized in that a shaped polyolefin article is used obtained by extrusion, pressure forming or sintering of a melted or particulate polyolefin.

8. Process according to any one of claims 1–6, characterized in that a shaped solvent-containing polyolefin article is applied obtained by converting a suspension of a polyolefin in a solvent at elevated temperature in a screw extruder provided with conveying and kneading means to form a homogeneous solution and transforming this solution into a solvent-containing article.

9. Process according to any one of claims 1–6, characterized in that the shaped polyolefin article applied is a polyolefin gel obtained by subjecting a solution of a high-molecular polyolefin to thermoreversible gelling and substantially liberating the shaped gel from solvent.

10. Process according to any one of claims 1–9, characterized in that after shaping but before the swelling the formed polyolefin article is subjected to partial stretching.

11. Process for preparing polyolefin articles having a high tensile strength and modulus, characterized in that a polyolefin gel article obtainable while applying the process according to any one or more of claims 1–10 is stretched at elevated temperature, whether or not after complete or partial removal of swelling agent.

## Patentansprüche

1. Verfahren zum Herstellen von hochdehnbaren Gelgegenständen auf Basis von hochmolekularen Polyolefinen, welches Verfahren dadurch gekennzeichnet ist, daß ein geformter lösungsmittelhaltiger oder lösungsmittelfreier Gegenstand aus einem Polyolefin mit einem gewichtsmittleren Molgewicht von mindestens 4 x $10^5$ mit einem Quellmittel bei einer Temperatur oberhalb der Lösungstemperatur des Polyolefins und unterhalb der Temperatur, bei der sich das Polymer und/oder das Quellmittel zersetzen, während eines derartigen Zeitraumes (t) in Berührung gebracht wird, daß t, ausgedrückt in Minuten, höher als 0,1 $D^2$ und niedriger als 100 $D^2$ ist, wobei D die Dicke bzw. der Durchmesser des Gegenstandes in mm ist, bis der gequollene Gegenstand 60 bis 99% (Gew.) Quellmittel enthält, und der gequollene Gegenstand dann auf unterhalb Gelierungstemperatur abgekühlt wird.

2. Verfahren nach Anspruch 1, dadurch gekennzeichnet, daß der geformte Polyolefingegenstand mit dem Quellmittel während eines derartigen Zeitraumes in Berührung gebracht wird, daß der gequollene Gegenstand 75 bis 95% (Gew.) Quellmittel enthält.

3. Verfahren nach Anspruch 1 oder 2, dadurch gekennzeichnet, daß der geformte Polyolefingegenstand mit Quellmittel 0,01 bis 10 Minuten in Berührung gebracht wird.

4. Verfahren nach einem der Ansprüche 1 bis 3, dadurch gekennzeichnet, daß der geformte Polyolefingegenstand mit dem Quellmittel bei einer Temperatur von etwa 75 bis etwa 220°C in Berührung gebracht wird.

5. Verfahren nach einem der Ansprüche 1 bis 4, dadurch gekennzeichnet, daß das verwendete Quellmittel ein gasförmiges niederes Alkan ist.

6. Verfahren nach einem der Ansprüche 1 bis 4, dadurch gekennzeichnet, daß das verwendete Quellmittel Decalin, Xylol, Tetralin oder Trichlorbenzol ist.

7. Verfahren nach einem der Ansprüche 1 bis 6, dadurch gekennzeichnet, daß ein geformter Polyolefingegenstand verwendet wird, der durch Extrudieren, Druckformen oder Sintern eines geschmolzenen oder teilchenförmigen Polyolefins erhalten wird.

8. Verfahren nach einem der Ansprüche 1 bis 6, dadurch gekennzeichnet, daß ein geformter lösungsmittelhaltiger Polyolefingegenstand verwendet wird, der durch überführen einer Suspension eines Polyolefins in einem Lösungsmittel bei erhöhter Temperatur in einem Schneckenextruder, der mit Förder- und Knetmitteln zur Bildung einer homogenen Lösung versehen ist, und überführen dieser Lösung in einen lösungsmittelhaltigen Gegenstand erhalten wird.

9. Verfahren nach einem der Ansprüche 1 bis 6, dadurch gekennzeichnet, daß der verwendete geformte Polyolefingegenstand ein Polyolefingel ist, das dadurch erhalten wird, daß eine Lösung eines hochmolekularen Polyolefins wärmereversiblem Gelieren unterworfen und das geformte Gel im wesentlichen von Lösungsmittel befreit wird.

10. Verfahren nach einem der Ansprüche 1 bis 9, dadurch gekennzeichnet, daß nach dem Formen, aber vor dem Quellen der geformte Polyolefingegenstand teilweise gestreckt wird.

11. Verfahren zum Herstellen von Polyolefingegenständen mit hoher Zugfestigkeit und hohem Elastizitätsmodul, dadurch gekennzeichnet, daß ein Polyolefingelgegenstand, der durch Anwenden des Verfahrens nach einem oder mehreren der Ansprüche 1 bis 10 erhältlich ist, bei erhöhter Temperatur, gegebenenfalls nach vollständiger oder teilweiser Entfernung des Quellmittels, gestreckt wird.

## Revendications

1. Procédé de préparation d'articles hautement étirables en gel à partir de polyoléfines de haut poids moléculaire, caractérisé en ce qu'on met en contact un article façonné contenant du solvant ou exempt de solvant en une polyoléfine ayant une masse moléculaire moyenne en poids d'au moins $4 \times 10^5$ avec un agent porogène à une température supérieure à la température de dissolution de la polyoléfine et au dessous de la température à laquelle le polymère et/ou l'agent porogène sont décomposés, pendant une durée (t) telle que t, exprimé en minutes, est supérieur à $0,1$ $D^2$ et au dessous de $100$ $D^2$, D représentant l'épaisseur, plus exactement le diamètre de l'article en mm, jusqu'à ce que l'article gonflé renferme de 60 à 99% en poids de l'agent progène et ensuite on refroidit l'article gonflé au dessous de la température de gélification.

2. Procédé selon la revendication 1, caractérisé en ce qu'on met en contact l'article façonné en polyoléfine avec un agent progène pendant une durée telle que l'article gonflé renferme de 75 à 95% en poids de l'agent porogène.

3. Procédé selon la revendication 1 ou 2, caractérisé en ce qu'on met en contact l'article façonné en polyoléfine avec l'agent porogène pendant 0,01 à 10 minutes.

4. Procédé selon l'une quelconque des revendications 1 à 3, caractérisé en ce qu'on met l'article façonné en polyoléfine en contact avec l'agent porogène à une température d'environ 75 à 220°C.

5. Procédé selon l'une quelconque des revendications 1 à 4, caractérisé en ce que l'agent porogène appliqué est un alcane inférieur gazeux.

6. Procédé selon l'une quelconque des revendications 1 à 4, caractérisé en ce que l'agent porogène appliqué est la décaline, le xylène, la tétraline ou le trichlorobenzène.

7. Procédé selon l'une quelconque des revendications 1 à 6 caractérisé en ce qu'on utilise un article façonné en polyoléfine qu'on obtient par extrusion, formage par pression ou frittage d'une polyoléfine fondue ou particulaire.

8. Procédé selon l'une quelconque des revendications 1 à 6, caractérisé en ce qu'on utilise un article façonné en polyoléfine contenant un solvant qu'on obtient en convertissant une suspension d'une polyoléfine dans un solvant à une température élevée dans une extrudeuse à vis comportant des moyens d'acheminemen et de pétrissage pour former une solution homogène et on transforme cette solution en un article contenant du solvant.

9. Procédé selon l'une quelconque des revendications 1 à 6, caractérisé en ce que l'article façonné en polyoléfine est un gel de polyoléfine qu'on obtient en soumettant une solution de polyoléfine de haute masse moléculaire à une gélification thermoréversible et en débarrassant pratiquement le gel façonné du solvant qu'il contient.

10. Procédé selon l'une quelconque des revendications 1 à 9, caractérisé en ce qu'après façonnage mais avant le gonflement, on soumet l'article façonné en polyoléfine à un étirage partiel.

11. Procédé de préparation d'articles en polyoléfines présentant une résistance à la traction et un module élevés, caractérisé en ce qu'on étire un article en gel de polyoléfine obtenu par le procédé selon l'une quelconque des revendications 1 à 10, à une température élevée après ou non une élimination totale ou partielle de l'agent porogène.